# EUROPEAN PATENT APPLICATION

(11) **EP 2 075 738 A1**
(43) Date of publication of application: **01.07.2009**
(21) Application number: 07301752.7
(22) Date of filing: 27.12.2007
(51) Int. Cl.: G06K 1/12, H04L 9/32

(54) **A method for printing a scanner readable code on a secure object**

(71) Applicant: Gemalto SA, 92190 Meudon (FR); Gemalto S.p.A., 00143 Rome (IT)
(72) Inventor: Perion, Fabrice, 92190 Meudon (FR); Broccolini, Carla, 92190 Meudon (FR); Ros, Frédéric, 92190 Meudon (FR)
(74) Representative: Scheer, Luc

(57) **Abstract**

The present invention concerns a method for printing a scanner readable code on a secure object, for example a passport. The secure object comprises a chip and a photograph of it's owner is printed on the secure object.

According to the invention, the method comprises the steps of:
i - generating a private key and a public key;
ii - extracting low-level information from the photograph;
iii - transforming this low-level information by executing a second pre-image resistant function;
iv - signing the result of the transformation with the private key;
v - transforming each block of data of the signed result in a corresponding color;
vi - printing the colors on the secure object for obtaining the scanner readable code.

## Description

The present invention concerns a method for printing a scanner readable code on a secure object or document. The term secure object/document encompasses smart cards, passports or ID cards comprising a chip and a photograph of the owner of the secure object printed thereon.

More precisely, the invention concerns such a method permitting to be confident that the secure object has not been forged, for example during a control at a border or by security agents (police,...).

The forgery of a secure object comprising a chip and a photograph of its owner can for example consist in modifying the photograph printed on it. In order to detect such a modification, it is known to memorize in the chip some data characterizing the photograph, for example a hash of the scan of the photograph. For controlling the integrity of the secure document, an agent can scan the photograph of the secure document and compare this scan with the data memorized in the chip. If the comparison shows a match, the document can be considered as non-forgered. Otherwise, the document can be considered as having been forgered.

The purpose of the invention is to propose a method improving this known solution in order to ensure the integrity/security of a portable object for identity that includes a smart card and photograph like an electronic identity card or an electronic passport. Said otherwise, the purpose is to ensure that the photograph, the content of the chip and the card body are consistent (coherent) and not one of these three elements have been changed.

This objective, and others that will emerge hereinafter, are achieved in accordance with the invention with the aid of a method for printing a scanner readable code on a secure object, the secure object comprising a chip and a photograph of the owner of the secure object, the photograph being printed on the secure object, this method comprising the steps of:
i - generating a private key and a public key;
ii - extracting low-level information from the photograph;
iii - transforming this low-level information by executing a function being second pre-image resistant;
iv - signing the result of the transformation with the private key;
v - transforming each block of data of the signed result in a corresponding color;
vi - printing these colors on the secure object for obtaining the scanner readable code.

In one embodiment, the colors are grey levels. In another embodiment, the colors are constituted by a mix of red, blue and green.

Preferably, the low level information is combined with information linked to the owner before being transformed by the second pre-image resistant function.

Advantageously, the second pre-image resistant function is a hash of the low-level information.

Preferably, the private key is destroyed after step iv.

Other features and advantages of the invention will emerge more clearly from a reading of the following description of one preferred embodiment of the invention given by way of non-limiting illustrative example only and from the accompanying drawings.

Fig. 1 is a flow-chart representing the steps of the method according to the invention;

Fig. 2 is a flow-chart representing the steps for verifying the integrity of a portable object realized according to the method of figure 1.

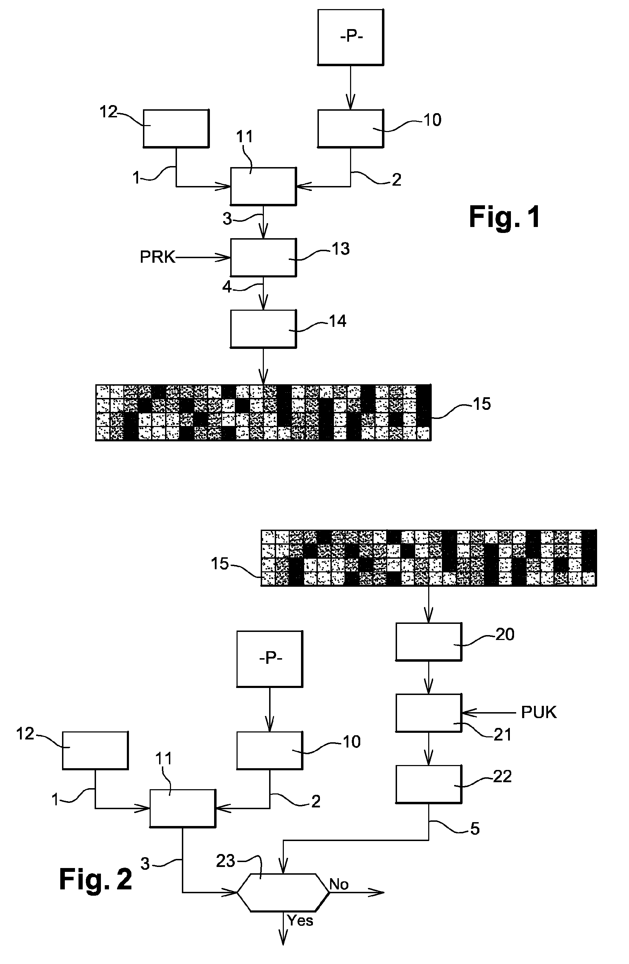

Fig. 1 is a flow-chart representing the steps of the method according to the invention.

Step 10 corresponds to the extraction, from a photograph P, of low level information. This extraction can consist in scanning the photograph of the owner of the object/document that has to be secured with a scanner readable code according to the invention. The scanner used for this step can be a medium quality scanner as it will be further apparent. Photograph P can be black and white or in color. The data obtained by this extraction are then transformed by executing a function 11 being second pre-image resistant, typically a hash of the extracted data (SHA-1, RIPEMD, etc). A function is said being "second pre-image resistant" when given x, it is difficult to find y different from x such that H(y) = H(x).

Preferably, some information 12 linked to this owner is combined with the data coming from the scanner. This information can be the owner's first name, last name, age, date and place of birth, etc. When such an information is used, the above mentioned hash is applied to 1 II 2, where II corresponds to a concatenation, 1 to the information issued by 12 and 2 to the data obtained by the scan.

The hashed data are noted 3 and are of fixed length. They are applied to an asymmetric algorithm 13 receiving also a private key PRK associated to the owner of the object/document. This private key PRK and the corresponding public key, hereinafter noted PUK, are generated according to known methods, e.g. according to the RSA algorithm. The public key PUK is preferably certified by a governmental organization. The private key PRK is used to sign the hashed data 3 in a signed result 4. For example, if RSA is used, the signed result 4 contains 1024 bits, i.e. 128 bytes. A facultative padding can be done during step 13.

After signature generation, the private key PRK can be destroyed. This means that PRK will not be memorized somewhere. The public key PUK is stored in the chip of the secure object.

These 128 bytes are then applied to a secure strip algorithm 14 that converts each block of data of the signed result 4 in a corresponding color. The term color is here used in a large sense, i.e. it encompasses different levels of grey and different colors, from white to black.

The different colors will be printed on the secure object for obtaining a scanner readable code 15.

In a first embodiment, each block of data, e.g. each byte, is converted in a level of grey.

To consider the medium precision of a medium quality scanner, we can consider that per each byte of the signature 4 to include a matrix of 8 x 8 pixels is used. A number of 128 of such matrixes is needed to encode the whole signature 4.

If the photograph (of identity) is 512 x 512 pixels, the scanner readable code, that can be assimilated to a secure strip, could be added under the photograph with the following format: 512 x 16 pixels = 128 x (8 x 8) pixels.

This format represents the minimum information needed to embed 128 bytes. In order to get redundancy and security mechanisms (redundancy codes, correction code, etc), this size could be enlarged. Redundancy can for example consist in repeating several times the scanner readable code obtained from the signature 4.

This representation (8 bits -> 64 bits) allows being confident to read the value even with a medium quality reader, as it will be apparent hereafter.

When printing is done on a card, in order to resist to the ageing of the card body, a black and white representation could be used (grey scale) with per example, the following algorithm:

For each byte of the signature (bVal = (00.255)), a bloc matrix (8 x 8 pixels) is set where all the elements (64) Red-Blue-Green are equal to bVal. The result is a grey matrix (8 x 8) that represents a byte of signature 4. This algorithm then uses 256 levels of grey to encode the signature 4.

In an alternative way, some others algorithms could be used to encode this signature 4: for example, a 'Color algorithm' that uses 256 levels among 256*256*256 (= 16,777,216) possibilities of Red-Blue-Green. Those 256 levels are chosen in order to get enough 'distances' between 2 levels, and thus anticipate errors due to ageing or the bad precision of the measure or the poor quality of the scanner/camera.

This representation (greyscale or distance level color algorithm) allows being confident to always read the value and thus anticipate the ageing of the identity document.

So, in order to be 'easily' manipulated, the scanner readable code 15 is designed to be resistant to the medium quality printers/scanners.

The printing of this scanner readable code 15 could be performed by the same printers used to print the card body, the photograph P, and with the same process.

Fig. 2 is a flow-chart representing the steps for verifying the integrity of a portable object realized according to the method of figure 1.

Such a verification typically occurs at a border or at the check-in in an airport.

For verifying the integrity of the secure portable object/document, the invention proposes to scan, with a medium quality scanner, the readable code 15 printed according to the method described in reference of figure 1.

The code 15 is scanned during step 20 and an asymmetric verification is done at step 21 by using the public key PUK stored in a memory of the chip. The output of the verifier gives an information on the validity of the signature and the value of the signed hash. A facultative depadding is done at step 22 (when a padding has been done at step 13) and the signed hash is applied to a verifier 23.

In parallel, the same process as described above in reference of figure 1 is launched (steps 10, 11 and 12 identical to those already described). The hashed data 3 are available after execution of step 11. These hashed data are then compared in the verifier (step 23) with the data 5. Step 24 is a consistency verification consisting in verifying that the scanner readable code 15 has been obtained with the photograph P printed on the secure object/document.

If the data are consistent, the result of test 23 is "Yes", otherwise, in case of forgery, the result is "No".

The invention therefore allows to verify the coherence of the whole portable object without any external information.

## Claims

1. A method for printing a scanner readable code on a secure object, said secure object comprising a chip and a photograph of the owner of said secure object, said photograph being printed on said secure object, said method comprising the steps of:
i - generating a private key and a public key;
ii - extracting low-level information from said photograph;
iii - transforming said low-level information by executing a second pre-image resistant function;
iv - signing the result of said transformation with said private key;
v - transforming each block of data of the signed result in a corresponding color;
vi - printing said colors on said secure object for obtaining said scanner readable code.

2. A method according claim 1, wherein said colors are grey levels.

3. A method according claim 1, wherein said colors are constituted by a mix of red, blue and green.

4. A method according any of the claims 1 to 3 wherein said low level information is combined with information linked to said owner before being transformed by said second pre-image resistant function.

5. A method according any of the claims 1 to 4 wherein said second pre-image resistant function is a hash of said low-level information.

6. A method according to any of the claims 1 to 5, wherein said private key is destroyed after step iv.
